(19) Europäisches Patentamt
European Patent Office
Office européen des brevets

(11) EP 1 191 083 B1

(12) EUROPÄISCHE PATENTSCHRIFT

(45) Veröffentlichungstag und Bekanntmachung des Hinweises auf die Patenterteilung:
**27.10.2004 Patentblatt 2004/44**

(51) Int Cl.$^7$: **C09K 19/46**, C09K 19/02

(21) Anmeldenummer: **01119706.8**

(22) Anmeldetag: **24.08.2001**

# (54) TN-und STN-Flüssigkristallanzeigen

TN and STN liquid crystal displays

Affichages à cristaux liquides TN et STN

(84) Benannte Vertragsstaaten:
**AT BE CH CY DE DK ES FI FR GB GR IE IT LI LU MC NL PT SE TR**

(30) Priorität: **21.09.2000 DE 10046754**

(43) Veröffentlichungstag der Anmeldung:
**27.03.2002 Patentblatt 2002/13**

(73) Patentinhaber: **MERCK PATENT GmbH**
**64293 Darmstadt (DE)**

(72) Erfinder:
- **Hirschmann, Harald, Dr.**
**64281 Darmstadt (DE)**
- **Schüpfer, Sven**
**63741 Aschaffenburg (DE)**
- **Kojima, Akihiro**
**Atsugi-shi, Kanagowa 243-0813 (JP)**

(56) Entgegenhaltungen:
**DE-A- 19 750 957**
**DE-A- 19 828 149**
**DE-A- 19 844 321**
**DE-A- 19 848 098**
**GB-A- 2 322 631**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 191 083 B1

## Beschreibung

Die Erfindung betrifft verdrillte und hochverdrillte nematische Flüssigkristallanzeigen (englisch: Twisted Nematic, kurz: TN; bzw. Supertwisted Nematic, kurz: STN) mit sehr kurzen Schaltzeiten und guten Steilheiten und Winkelabhängigkeiten sowie die darin verwendeten neuen nematischen Flüssigkristallmischungen.

TN-Anzeigen sind bekannt, z.B. aus M. Schadt und W. Helfrich, Appl. Phys. Lett., 18, 127 (1971). STN-Anzeigen sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8.-10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1), pp. 1-8 (1986). Der Begriff STN umfaßt hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Conference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236, DST-LCD's (EP OS 0 246 842) oder BW-STN-LCD's (K. Kawasaki et al., SID 87 Digest 391 (20.6)).

STN-Anzeigen zeichnen sich im Vergleich zu Standard-TN-Anzeigen durch wesentlich bessere Steilheiten der elektrooptischen Kennlinie und, bei mittleren und höheren Multiplexraten, beispielsweise 32 bis 64 und höher, durch bessere Kontrastwerte aus. Dagegen ist in TN-Anzeigen im Allgemeinen der Kontrast aufgrund des besseren Dunkelwertes höher und die Winkelabhängigkeit des Kontrastes geringer als in STN-Anzeigen mit niedrigen Multiplexraten von beispielsweise weniger als 32.

Von besonderem Interesse sind TN- und STN-Anzeigen mit sehr kurzen Schaltzeiten insbesondere auch bei tieferen Temperaturen. Zur Erzielung von kurzen Schaltzeiten wurden bisher die Rotationsviskositäten der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Zur Erzielung einer steilen elektrooptischen Kennlinie in den erfindungsgemäßen Anzeigen sollen die Flüssigkristallmischungen relativ große Werte für das Verhältnis der elastischen Konstanten $K_{33}/K_{11}$, sowie relativ kleine Werte für $\Delta\varepsilon/\varepsilon_{\perp}$ aufweisen, wobei $\Delta\varepsilon$ die dielektrische Anisotropie und $\varepsilon_{\perp}$ die dielektrische Konstante senkrecht zur Moleküllängsachse ist.

Über die Optimierung des Kontrastes und der Schaltzeiten hinaus werden an derartige Mischungen weitere wichtige Anforderungen gestellt:

1. Breites d/p-Fenster

2. Hohe chemische Dauerstabilität

3. Hoher elektrischer Widerstand

4. Geringe Frequenz- und Temperaturabhängigkeit der Schwellenspannung.

Die erzielten Parameterkombinationen sind bei weitem noch nicht ausreichend, insbesondere für Hochmultiplex-STN-Anzeigen (mit einer Multiplexrate im Bereich von ca. 1/400), aber auch für Mittel- und Niedermultiplex-STN- (mit Multiplexraten im Bereich von ca. 1/64 bzw. 1/16), und TN-Anzeigen. Zum Teil ist dies darauf zurückzuführen, daß die verschiedenen Anforderungen durch Materialparameter gegenläufig beeinflußt werden.

Es besteht somit immer noch ein großer Bedarf an TN- und STN-Anzeigen, insbesondere für Mittel- und Niedermultiplex-STN-Anzeigen, mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den oben angegebenen Anforderungen gerecht werden.

Der Erfindung liegt die Aufgabe zugrunde, TN- und STN-Anzeigen bereitzustellen, die die oben angegebenen Nachteile nicht oder nur in geringerem Maße und gleichzeitig kurze Schaltzeiten, insbesondere bei tiefen Temperaturen, und sehr gute Steilheiten sowie verbesserte Temperaturabhängigkeit der Betriebsspannung aufgrund einer verbesserten Frequenzabhängigkeit der Dielektrizitätskonstanten aufweisen.

Es wurde nun gefunden, daß diese Aufgabe gelöst werden kann, wenn man nematische Flüssigkristallmischungen verwendet, die eine oder mehrere Verbindungen der Formel I enthalten,

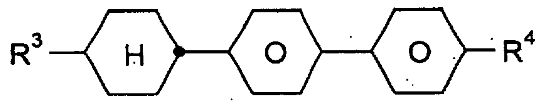

worin

$R^3$ eine Alkenylgruppe mit 2 bis 7 C-Atomen, und

$R^4$ eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O- Atome nicht direkt miteinander verknüpft sind,

bedeuten,
und mindestens eine Verbindung der Formel IV9 und/oder IV24 enthalten

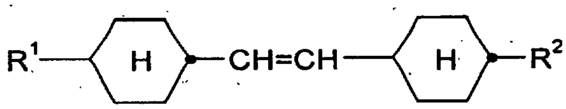

IV9

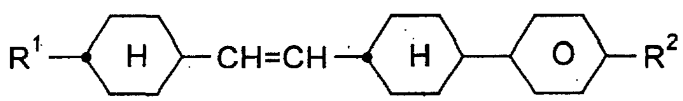

IV24

worin $R^1$ Alkenyl mit 2 bis 7 C-Atomen und $R^2$ Alkyl oder Alkoxy mit 1 bis 6 C-Atomen bedeutet.
Die Verwendung der Verbindungen der Formel I in den Mischungen für erfindungsgemäße TN- und STN-Anzeigen bewirkt

- geringe Frequenzabhängigkeit der Dielektrizitätskonstanten,
- geringe Temperaturabhängigkeit der Betriebsspannung und der Schwellenspannung, und
- sehr schnelle Schaltzeiten, insbesondere bei tiefen Temperaturen.

Die Verbindungen der Formel I verkürzen insbesondere deutlich die Schaltzeiten von TN- und STN-Mischungen bei gleichzeitiger Erhöhung der Steilheit und geringer Temperaturabhängigkeit der Schwellenspannung.
Weiterhin zeichnen sich die erfindungsgemäßen Mischungen durch folgende Vorzüge aus

- sie besitzen eine niedrige Viskosität,
- sie besitzen eine niedrige Schwellenspannung und Betriebsspannung,
- sie bewirken lange Lagerzeiten in der FK-Anzeige bei tiefen Temperaturen.

Die Dokumente GB-A-2 322 631, DE-A-197 50 957, DE-A-198 44 321, DE-A-198 48 098 und DE-A-198 28 149 beschreiben Flüssigkristallmischungen, die Alkenylverbindungen enthalten können, sie offenbaren jedoch keine Flüssigkristallmischungen gemäß Anspruch 1 der vorliegenden Anmeldung.
Gegenstand der Erfindung ist somit eine Flüssigkristallanzeige mit

- zwei Trägerplatten, die mit einer Umrandung eine Zelle bilden,
- einer in der Zelle befindlichen nematischen Flüssigkristallmischung mit positiver dielektrischer Anisotropie,

- Elektrodenschichten mit Orientierungsschichten auf den Innenseiten der Trägerplatten,
- einem Anstellwinkel zwischen der Längsachse der Moleküle an der Oberfläche der Trägerplatten und den Trägerplatten von 0 Grad bis 30 Grad, und
- einem Verdrillungswinkel der Flüssigkristallmischung in der Zelle von Orientierungsschicht zu Orientierungsschicht dem Betrag nach zwischen 22,5° und 600°,
- einer nematischen Flüssigkristallmischung bestehend aus

    a) 15 - 80 Gew:% einer flüssigkristallinen Komponente A, bestehend aus einer oder mehreren Verbindungen mit einer dielektrischen Anisotropie von über +1,5;

    b) 20 - 85 Gew.% einer flüssigkristallinen Komponente B, bestehend aus einer oder mehreren Verbindungen mit einer dielektrischen Anisotropie zwischen -1,5 und +1,5;

    c) 0 - 20 Gew.% einer flüssigkristallinen Komponente D, bestehend aus einer oder mehreren Verbindungen mit einer dielektrischen Anisotropie von unter -1,5 und

    d) gegebenenfalls einer optisch aktiven Komponente C in einer Menge, daß das Verhältnis zwischen Schichtdicke (Abstand der Trägerplatten) und natürlicher Ganghöhe der chiralen nematischen Flüssigkristallmischung etwa 0,2 bis 1,3 beträgt,

dadurch gekennzeichnet, daß Komponente B mindestens eine Verbindung der Formel I enthält

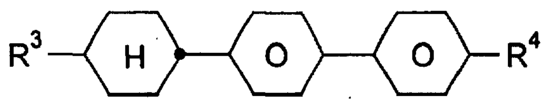

I

worin

$R^3$ eine Alkenylgruppe mit 2 bis 7 C-Atomen, und
$R^4$ eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O- Atome nicht direkt miteinander verknüpft sind,

bedeuten,
und mindestens eine Verbindung der Formel IV9 und/oder IV24 enthält

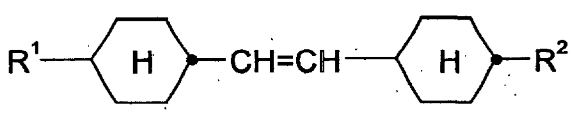

IV9

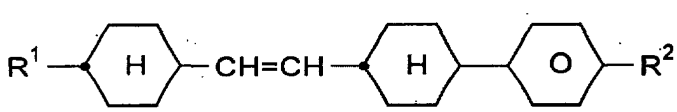

IV24

worin $R^1$ Alkenyl mit 2 bis 7 C-Atomen und $R^2$ Alkyl oder Alkoxy mit 1 bis 6 C-Atomen bedeutet.

Gegenstand der Erfindung sind auch entsprechende Flüssigkristallmischungen zur Verwendung in TN- und STN-Anzeigen, insbesondere in mittel- und niedrigmultiplexierten STN-Anzeigen.

Besonders bevorzugt sind Flüssigkristallmischungen, die eine oder mehrere Verbindungen der Formel I enthalten, worin $R^3$ geradkettiges 1 E-oder 3 E-Alkenyl mit 2 bis 7 C-Atomen bedeutet.

Ferner bevorzugt sind Flüssigkristallmischungen, die eine oder mehrere Verbindungen der Formel I enthalten, worin $R^4$ geradkettiges Alkyl mit 1 bis 8 C-Atomen bedeutet.

Besonders bevorzugte Verbindungen der Formel I sind ausgewählt aus den folgenden Formeln

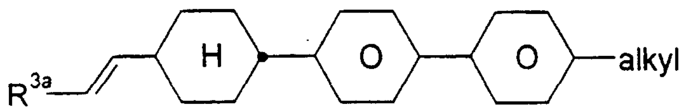

Ia

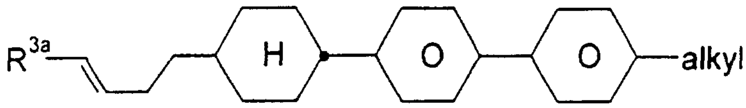

Ib

worin $R^{3a}$ H, $CH_3$, $C_2H_5$ oder n-$C_3H_7$, besonders bevorzugt $CH_3$ und alkyl eine Alkylgruppe mit 1 bis 8 C-Atomen bedeuten.

Die Verwendung von Verbindungen der Formel I führt in den erfindungsgemäßen Flüssigkristallmischungen zu besonders niedrigen Werten der Rotationsviskosität und zu TN- und STN-Anzeigen mit hoher Steilheit und schnellen Schaltzeiten insbesondere bei niedrigen Temperaturen.

Die erfindungsgemäßen Mischungen enthalten neben den Verbindungen der Formel I vorzugsweise eine oder mehrere Alkenylverbindungen der Formel II

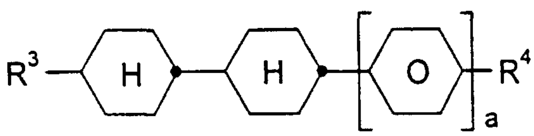

II

worin $R^3$ und $R^4$ die in Formel I angegebene Bedeutung besitzen und a 0 oder 1 bedeutet.

Besonders bevorzugte Verbindungen der Formel II sind ausgewählt aus den Formeln IIa bis IIg

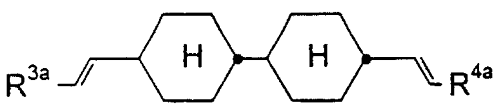

IIa

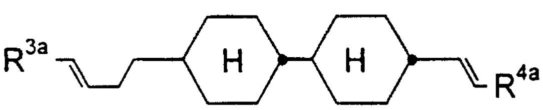

IIb

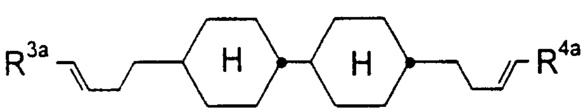

IIc

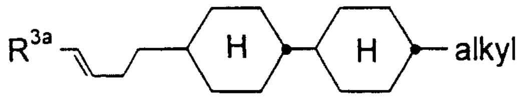

IId

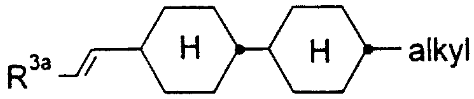

IIe

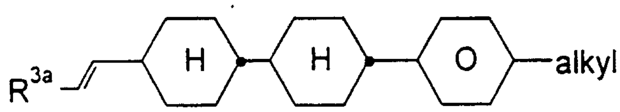

IIf

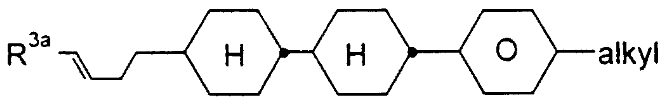

IIg

worin $R^{3a}$ und $R^{4a}$ jeweils unabhängig voneinander H, $CH_3$, $C_2H_5$ oder n-$C_3H_7$ und alkyl eine Alkylgruppe mit 1 bis 8 C-Atomen bedeuten.

Besonders bevorzugt sind Verbindungen der Formel IIa, insbesondere solche worin $R^{3a}$ und $R^{4a}$ $CH_3$ bedeuten, sowie Verbindungen der Formeln IIe, IIf und IIg, insbesondere solche worin $R^{3a}$ H bedeutet.

Die Verwendung von Verbindungen der Formel II führt in den erfindungsgemäßen Flüssigkristallmischungen zu besonders niedrigen Werten der Rotationsviskosität und zu TN- und STN-Anzeigen mit einer hohen Steilheit und schnellen Schaltzeiten insbesondere bei niedrigen Temperaturen.

Die erfindungsgemäßen Mischungen enthalten neben den dielektrisch neutralen Alkenylverbindungen der Formel II vorzugsweise eine oder mehrere dielektrisch positive Alkenylverbindungen der Formel II*

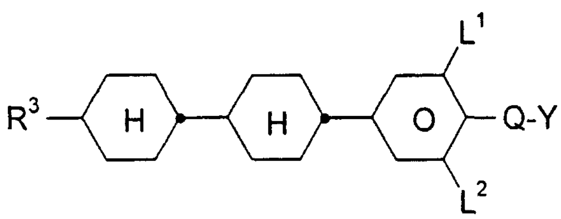

II*

worin

| | |
|---|---|
| $R^3$ | die in Formel angegebene Bedeutung besitzt, |
| Q | $CF_2$, $OCF_2$, CFH, OCFH oder eine Einfachbindung, |
| Y | F oder Cl, und |
| $L^1$ und $L^2$ | jeweils unabhängig voneinander H oder F |

bedeuten.

Besonders bevorzugte Verbindungen der Formel II* sind solche, worin $L^1$ und/oder $L^2$ F und Q-Y F oder $OCF_3$

bedeuten.

Ferner bevorzugt sind Verbindungen der Formel II*, worin $R^3$ 1E-alkenyl oder 3E-alkenyl mit 2 bis 7, insbesondere 2, 3 oder 4 C-Atomen bedeutet.

Die polaren Verbindungen der Formel II* mit einer dielektrischen Anisotropie von mehr als + 1.5 sind der oben definierten Komponente A zuzuordnen.

Die Komponente A enthält vorzugsweise eine oder mehrere Cyanoverbindungen der folgenden Formeln

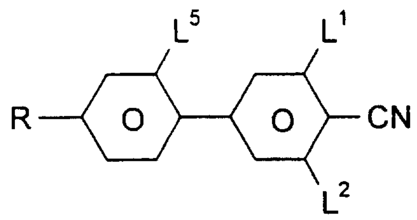

IIIa

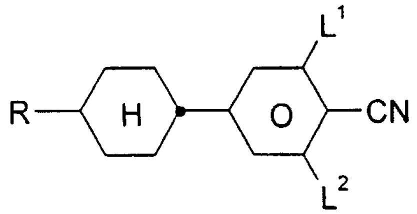

IIIb

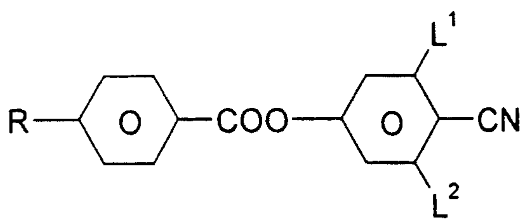

IIIc

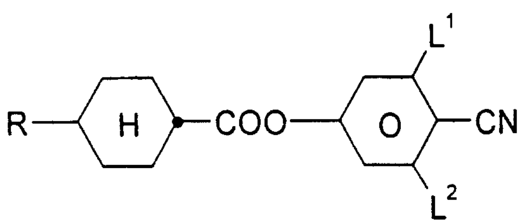

IIId

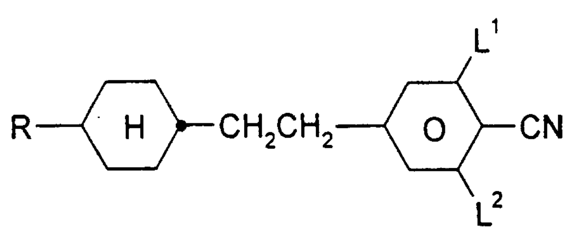

IIIe

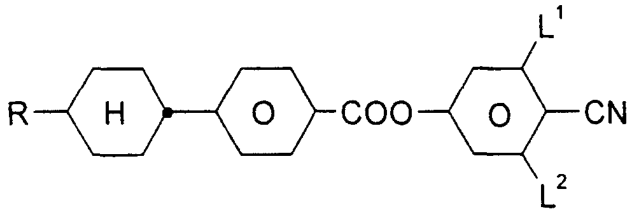

IIIf

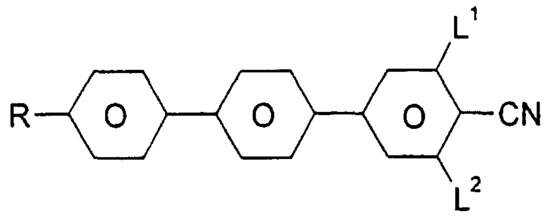

IIIg

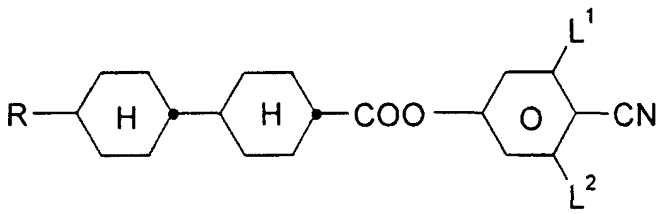

IIIh

worin

R eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O- Atome nicht direkt miteinander verknüpft sind, und

$L^1$ und $L^2$ jeweils unabhängig voneinander H oder F bedeuten.

R bedeutet in diesen Verbindungen besonders bevorzugt Alkyl oder Alkoxy mit 1 bis 8 C-Atomen oder Alkenyl mit 2 bis 7 C-Atomen.

Besonders bevorzugt sind Mischungen enthaltend eine oder mehrere Verbindungen der Formeln IIIb und/ oder IIIc, ferner IIIf, insbesondere solche worin $L^1$ und/oder $L^2$ F bedeuten.

Ganz besonders bevorzugt sind Mischungen, die eine oder mehrere Verbindungen der Formel IIIb und/oder IIIc enthalten, worin R Alkenyl mit 2 bis 7 C-Atomen bedeutet und $L^1$ und $L^2$ H oder F, vorzugsweise beide H bedeuten. Besonders bevorzugt sind Verbindungen der folgenden Formeln

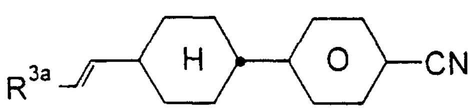

IIIb-1

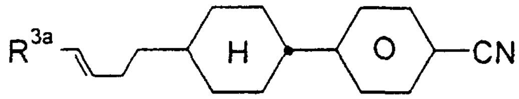

IIIb-2

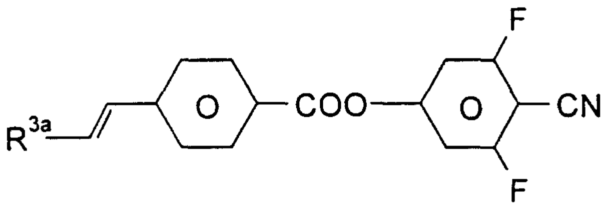

IIIc-1

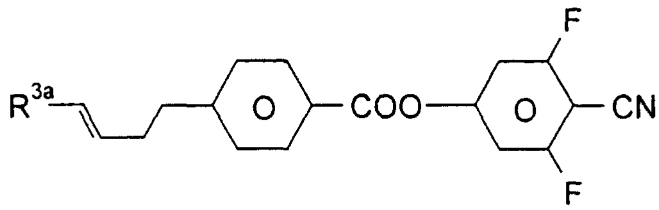

IIIc-2

worin $R^{3a}$ H, $CH_3$, $C_2H_5$ oder n-$C_3H_7$, in Formel IIIb-1 und IIIb-2 bevorzugt H oder $CH_3$, in Formel IIIc-1 und IIIc-2 bevorzugt H oder $C_2H_5$, bedeutet.

Ferner bevorzugt sind Mischungen, die eine oder mehrere Verbindungen der Formel IIIh enthalten, worin $L^2$ H und $L^1$ H oder F, insbesondere F, bedeutet.

In einer speziellen Ausführungsform enthält die Komponente A vorzugsweise eine oder mehrere 3,4,5-Trifluorphenylverbindungen der folgenden Formeln

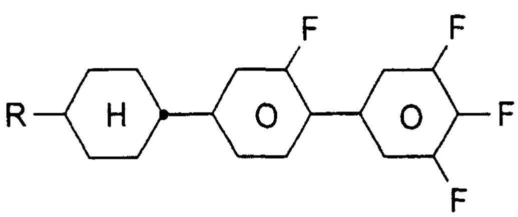

IVa

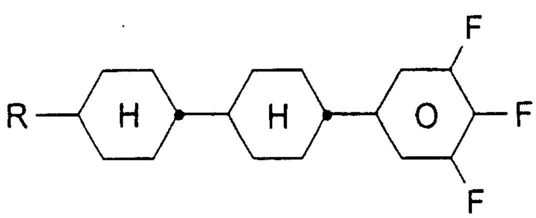

IVb

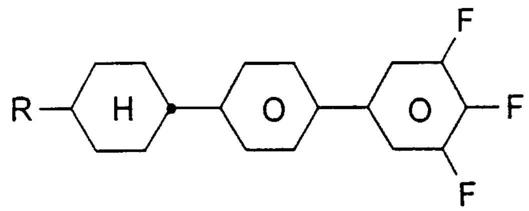

IVc

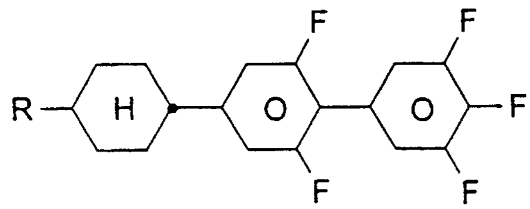

IVd

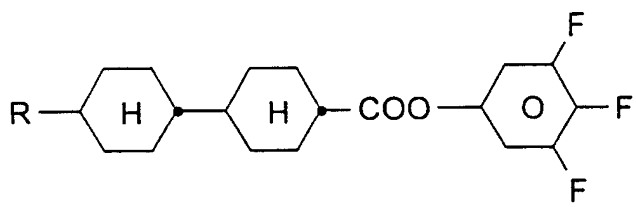

IVe

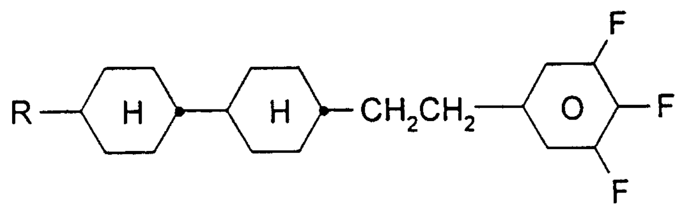

IVf

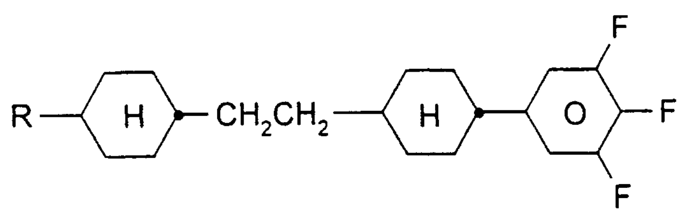

IVg

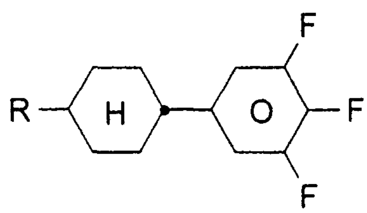

IVh

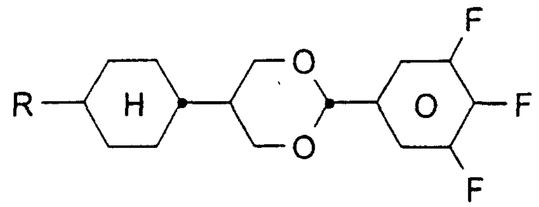

IVi

sowie gegebenenfalls eine oder mehrere Verbindungen mit polarer Endgruppe der folgenden Formeln

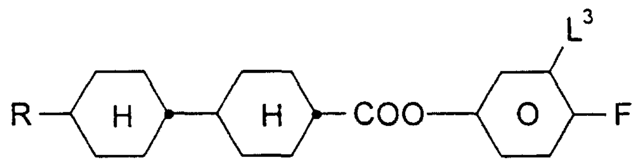

Va

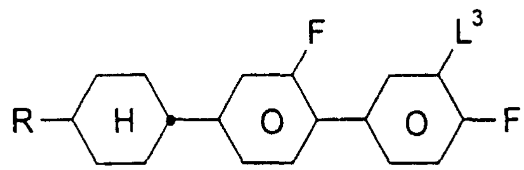

Vb

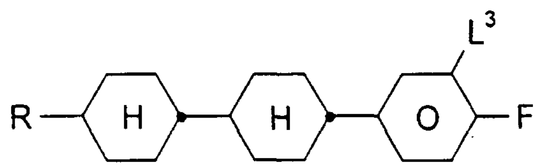

Vc

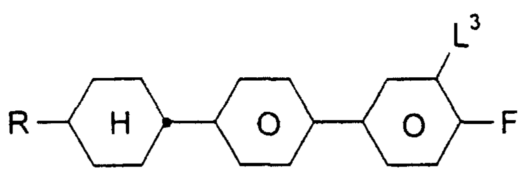

Vd

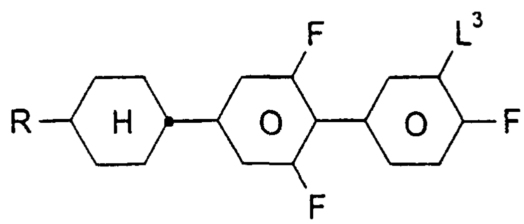

Ve

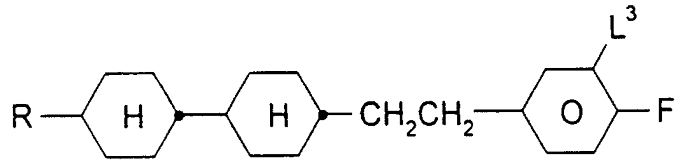

Vf

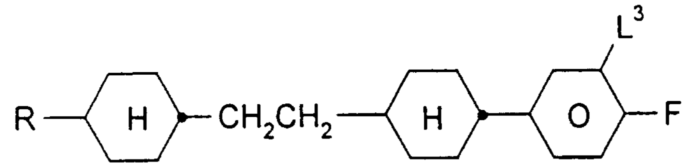

Vg

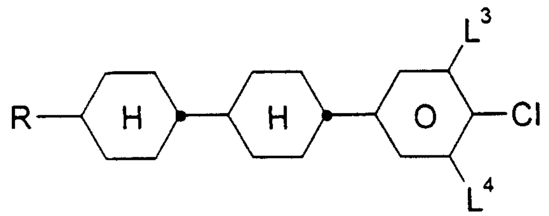

Vh

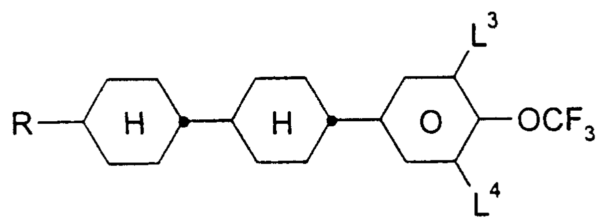

Vi

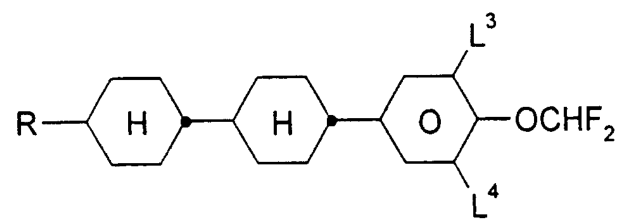

Vk

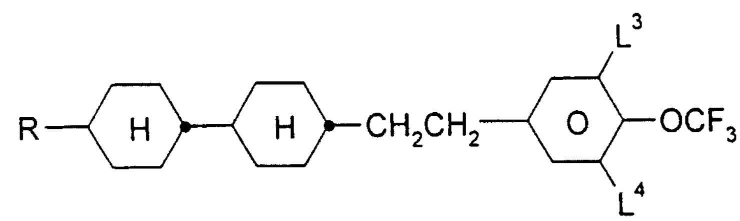

Vm

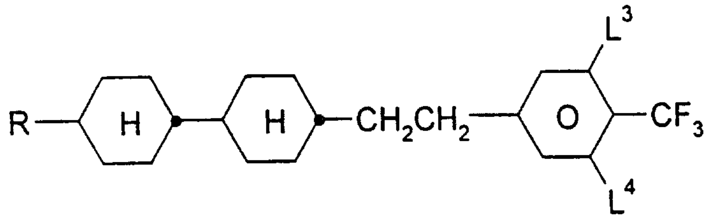

Vn

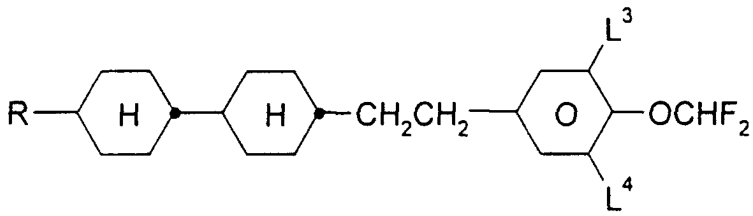

Vo

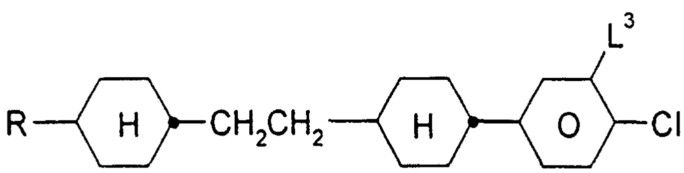

Vp

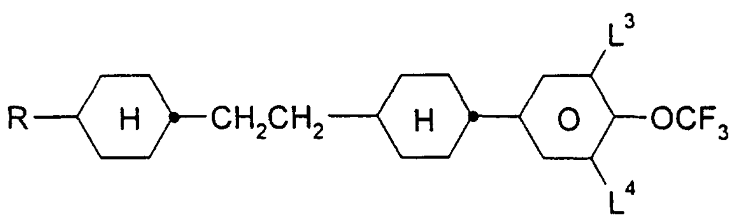

Vq

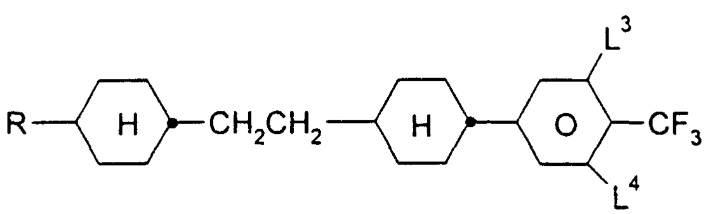

Vr

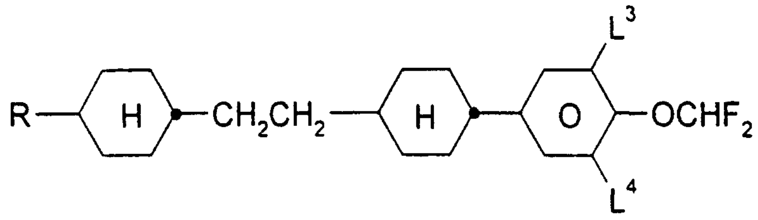

Vs

worin R eine der oben angegebenen Bedeutungen besitzt und $L^3$ und $L^4$ jeweils unabhängig voneinander H oder F bedeuten. R bedeutet in diesen Verbindungen besonders bevorzugt Alkyl oder Alkoxy mit 1 bis 8 C-Atomen.

Besonders bevorzugt sind Verbindungen der Formeln IVa, IVb, IVc, IVd, IVh und Vi, insbesondere Verbindungen der Formeln IVa, IVh und Vi.

Bevorzugte Flüssigkristallmischungen enthalten eine oder mehrere Verbindungen der Komponente A vorzugsweise in einem Anteil von 15 % bis 80 %, besonders bevorzugt von 20 % bis 70 %. Diese Verbindungen besitzen eine dielektrische Anisotropie $\Delta\varepsilon \geq +3$, insbesondere $\Delta\varepsilon \geq +8$, besonders bevorzugt $\Delta\varepsilon \geq +12$.

Bevorzugte Flüssigkristallmischungen enthalten ein oder mehrere Verbindungen der Komponente B, vorzugsweise in einem Anteil von 20 bis 85 %, besonders bevorzugt in einem Anteil von 30 bis 75 %. Die Verbindungen der Gruppe B, insbesondere solche mit Alkenylgruppen, zeichnen sich insbesondere durch ihre niedrigen Werte für die Rotationsviskosität $\gamma_1$ aus.

Die Komponente B enthält neben ein oder mehreren Verbindungen der Formel II vorzugsweise eine oder mehrere Verbindungen ausgewählt aus der Gruppe bestehend aus den Zweiringverbindungen der folgenden Formeln

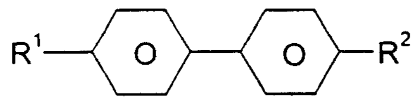

IV1

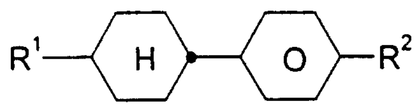

IV2

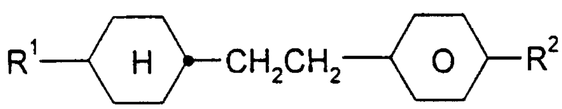

IV3

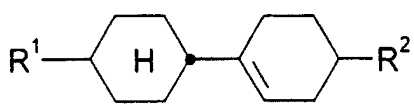

IV4

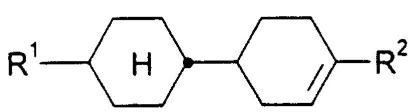

IV5

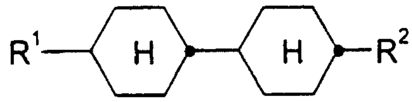

IV6

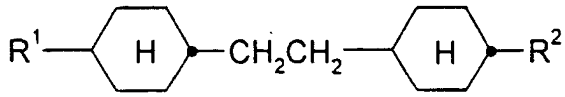

IV7

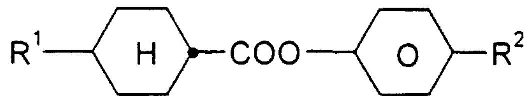

IV8

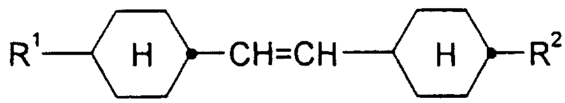

IV9

und/oder eine oder mehrere Verbindungen ausgewählt aus der Gruppe bestehend aus den Dreiringverbindungen der folgenden Formeln

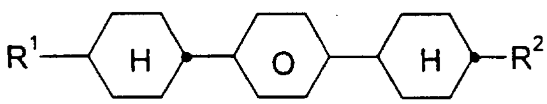

IV10

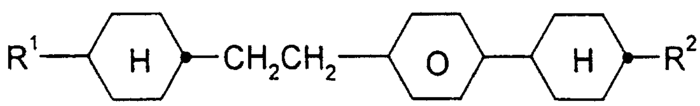

IV11

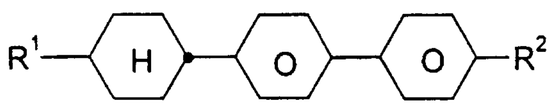

IV12

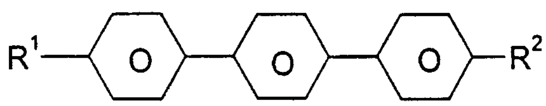

IV13

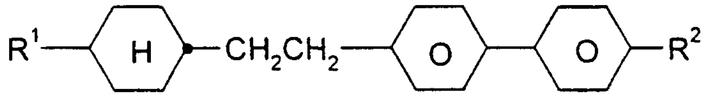

IV14

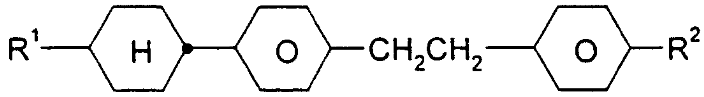

IV15

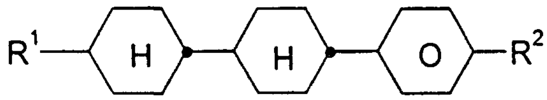

IV16

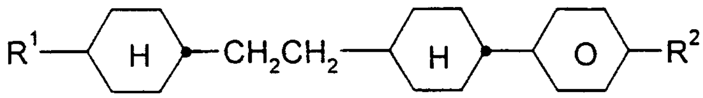

IV17

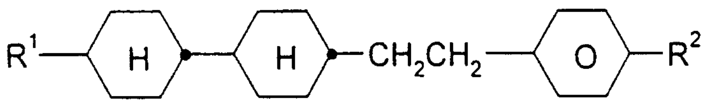

IV18

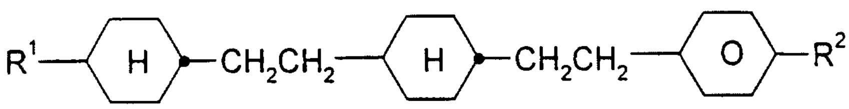

IV19

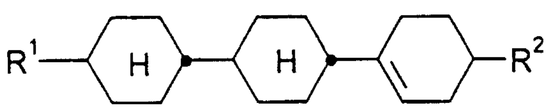

IV20

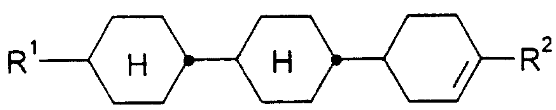

IV21

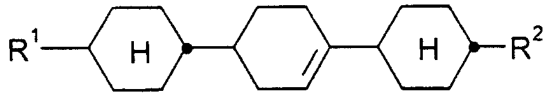

IV22

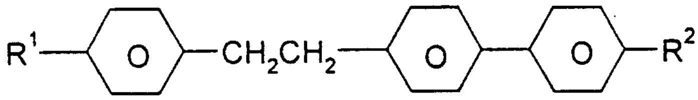

IV23

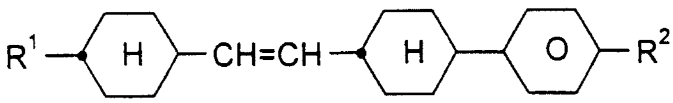

IV24

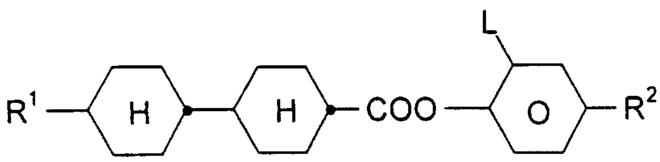

IV32

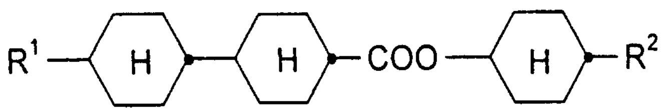

IV33

und/oder eine oder mehrere Verbindungen ausgewählt aus der Gruppe bestehend aus den Vierringverbindungen der folgenden Formeln

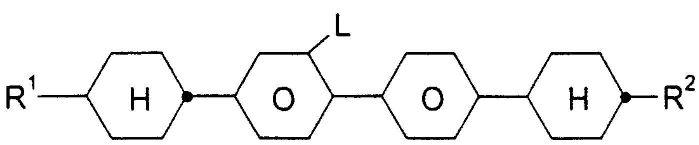

IV25

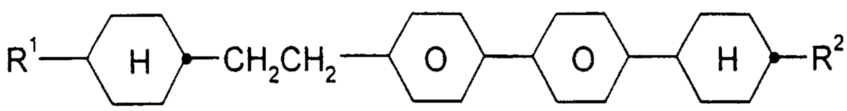

IV26

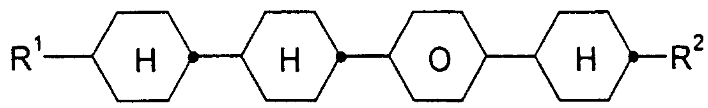

IV27

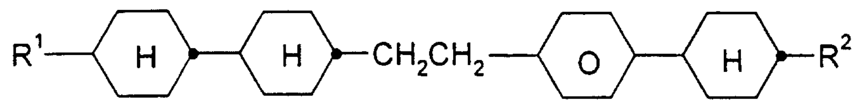

IV28

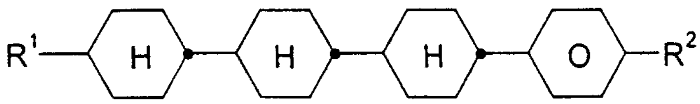

IV29

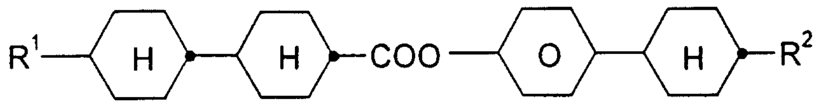

IV30

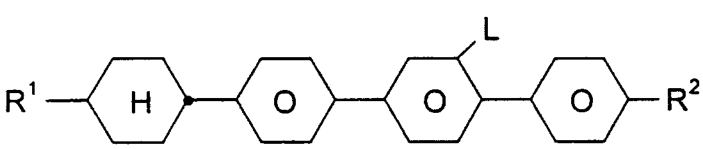

IV31

worin

$R^1$ und $R^2$ jeweils unabhängig voneinander eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, und

L H oder F

bedeuten.

Die 1,4-Phenylengruppen in IV10 bis IV19 und IV23 bis IV 32 können jeweils unabhängig voneinander auch durch Fluor ein- oder mehrfach substituiert sein.

Besonders bevorzugt sind Verbindungen der Formeln IV 25 bis IV 31, worin $R^1$ Alkyl und $R^2$ Alkyl oder Alkoxy, insbesondere Alkoxy, jeweils mit 1 bis 7 C-Atomen, bedeutet. Ferner bevorzugt sind Verbindungen der Formel IV 25 und IV 31, worin L F bedeutet.

Ganz besonders bevorzugt sind Verbindungen der Formeln IV25 und IV27.

$R^1$ und $R^2$ in den Verbindungen der Formeln IV1 bis IV30 bedeuten besonders bevorzugt geradkettiges Alkyl oder Alkoxy mit 1 bis 12 C-Atomen.

Die flüssigkristallinen Mischungen enthalten gegebenenfalls eine optisch aktive Komponente C in einer Menge, daß das Verhältnis zwischen Schichtdicke (Abstand der Trägerplatten) und natürlicher Ganghöhe der chiralen nematischen Flüssigkristallmischung größer 0,2 ist. Für die Komponente stehen dem Fachmann eine Vielzahl, zum Teil kommerziell erhältlicher chiraler Dotierstoffe zur Verfügung z.B. wie Cholesterylnonanoat, S-811 der Merck KGaA, Darmstadt und CB15 (BDH, Poole, UK). Die Wahl der Dotierstoffe ist an sich nicht kritisch.

Der Anteil der Verbindungen der Komponente C beträgt vorzugsweise 0 bis 10 %, insbesondere 0 bis 5 %, besonders bevorzugt 0 bis 3 %.

Die erfindungsgemäßen Mischungen enthalten neben den Verbindungen der Formel I vorzugsweise eine oder mehrere flüssigkristalline Tolan-Verbindungen. Aufgrund der hohen Doppelbrechung Δn der Tolan-Verbindungen kann bei geringeren Schichtdicken gearbeitet werden, wodurch die Schaltzeiten deutlich kürzer werden. Die Tolan-Verbindungen sind vorzugsweise ausgewählt aus der Gruppe bestehend aus Ta bis Th

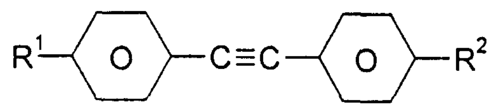

Ta

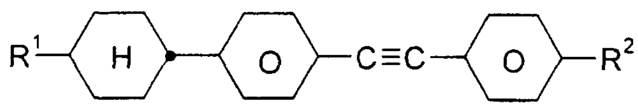

Tb

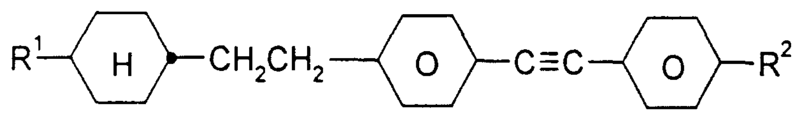

Tc

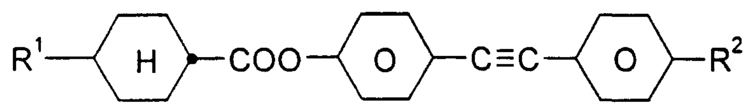

Td

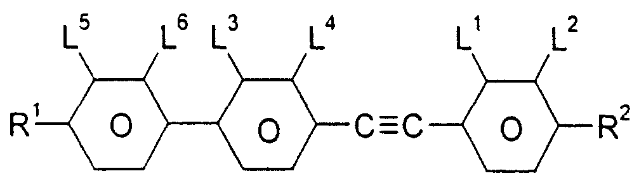

Te

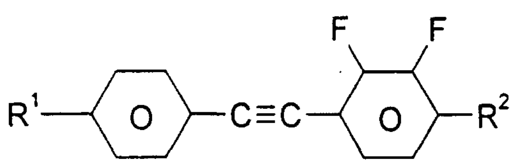

Tf

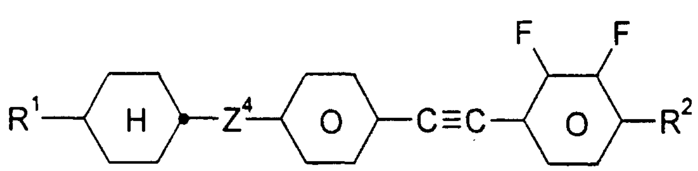

Tg

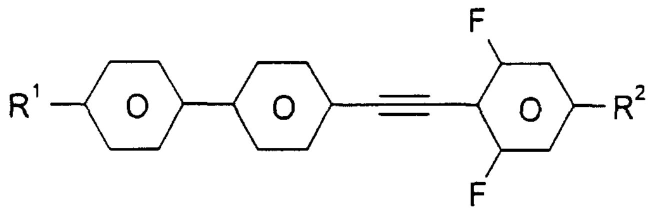

Th

worin $R^1$ und $R^2$ die oben angegebene Bedeutung besitzen,

$Z^4$ -CO-O-, $-CH_2CH_2-$ oder eine Einfachbindung, und
$L^1$ bis $L^6$ jeweils unabhängig voneinander H oder F bedeuten.

Besonders bevorzugt sind Verbindungen der Formel Ta, Tb und Th.
Besonders bevorzugte Verbindungen der Formel Te sind solche, worin einer, zwei oder drei der Reste $L^1$ bis $L^6$ F und die anderen H bedeuten, wobei $L^1$ und $L^2$ bzw. $L^3$ und $L^4$ bzw. $L^5$ und $L^6$ nicht beide gleichzeitig F bedeuten.
Der Anteil der Verbindungen aus der Gruppe enthaltend Ta und Tb ist vorzugsweise 5 bis 50 %, insbesondere 10 bis 40 %. Der Anteil der Verbindungen der Formel Th ist vorzugsweise 2 bis 35 %, insbesondere 4 bis 25 %.
Der Anteil der Verbindungen der Formeln Ta bis Th ist vorzugsweise 2 bis 55 %, insbesondere 5 bis 35 %.
Die erfindungsgemäßen Mischungen können auch gegebenenfalls bis zu 20 % einer oder mehrerer Verbindungen mit einer dielektrischen Anisotropie von weniger als -2 (Komponente D ) enthalten.
Falls die Mischungen Verbindungen der Komponente D enthalten, so sind dies vorzugsweise eine oder mehrere Verbindungen mit dem Strukturelement 2,3-Difluor-1,4-phenylen, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCT/DE 88/00133.
Weitere bekannte Verbindungen der Komponente D sind z.B. Derivate der 2,3-Dicyanhydrochinone oder Cyclohexanderivate mit dem Strukturelement

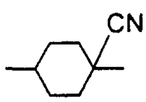

oder

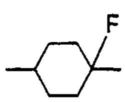

gemäß DE-OS 32 31 707 bzw. DE-OS 34 07 013.
Vorzugsweise enthalten die erfindungsgemäßen Flüssigkristallanzeigen keine Verbindungen der Komponente D.
Der Ausdruck "Alkenyl" in der Bedeutung von R, $R^1$, $R^2$, $R^3$ und $R^4$ umfaßt geradkettige und verzweigte Alkenylgruppen, im Falle von R, $R^1$ und $R^2$ mit 2-12, im Falle von $R^3$ und $R^4$ mit 2-7 Kohlenstoffatomen, insbesondere die geradkettigen Gruppen. Besonders bevorzugte Alkenylgruppen sind $C_2$-$C_7$-1E-Alkenyl, $C_4$-$C_7$-3E-Alkenyl, $C_5$-$C_7$-4-Alkenyl, $C_6$-$C_7$-5-Alkenyl, und $C_7$-6-Alkenyl, insbesondere $C_2$-$C_7$-1E-Alkenyl, $C_4$-$C_7$-3E-Alkenyl und $C_5$-$C_7$-4-Alkenyl.
Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.
Die einzelnen Verbindungen der Formeln I, II, III, IV, V, VI und T bzw. deren Unterformeln sowie auch andere Verbindungen, die in den erfindungsgemäßen TN- und STN-Anzeigen verwendet werden können, sind entweder bekannt, oder sie können analog zu den bekannten Verbindungen hergestellt werden.
In besonders bevorzugten Ausführungsformen enthalten die Mischungen

- eine oder mehrere Verbindungen der Formel Ia,

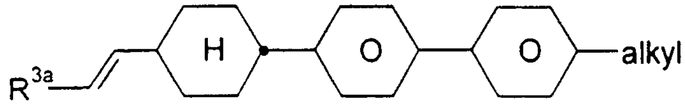

Ia

worin $R^{3a}$ und alkyl die oben angegebene Bedeutung besitzen, insbesondere solche worin $R^{3a}$ $CH_3$ und alkyl $CH_3$, $C_2H_5$ oder n-$C_3H_7$ bedeuten,

- eine, zwei oder drei Verbindungen der Formel I,
- 3 bis 40 %, insbesondere 5 bis 25 % einer oder mehrerer Verbindungen der Formel I,
- 5 bis 60 %, insbesondere 12 bis 50 % einer oder mehrerer Alkenylverbindungen der Formel II und II*,
- wenigstens eine Verbindung der Formel IIe und/oder IIf,
- wenigstens eine Alkenylverbindung ausgewählt aus der folgenden Gruppe

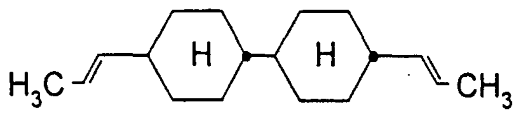

IIa1

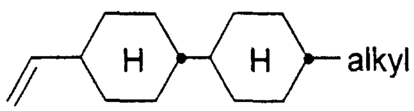

IIe1

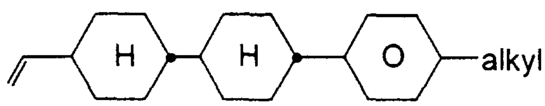

IIf1

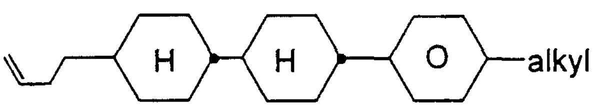

IIg1

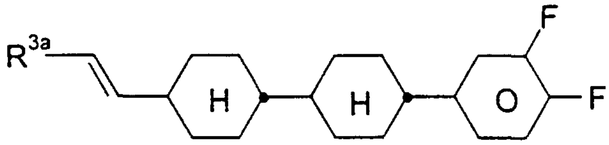

II*a

worin alkyl eine Alkylgruppe mit 1 bis 8 C-Atomen und $R^{3a}$ H oder $CH_3$ bedeutet,

- eine oder mehrere Verbindungen der Formel IV9 und/oder IV24, worin $R^1$ Alkenyl mit 2 bis 7 C-Atomen bedeutet und $R^2$ die oben angegebene Bedeutung hat und insbesondere Alkyl oder Alkoxy mit 1 bis 6 C-Atomen bedeutet, insbesondere eine oder mehrere Verbindungen der Formeln IV9a und/oder IV24a

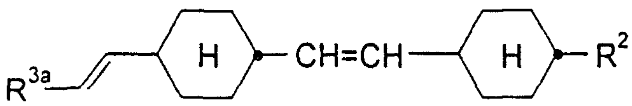

IV9a

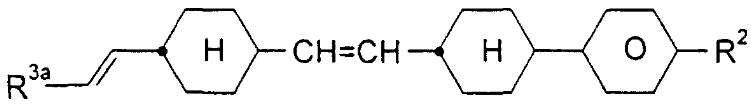

IV24a

worin $R^{3a}$ H, $CH_3$, $C_2H_5$ oder n-$C_3H_7$, insbesondere H oder $CH_3$ bedeutet, und $R^2$ die oben angegebene Bedeutung hat, vorzugsweise Alkyl oder Alkoxy mit 1 bis 6, insbesondere 1, 2 oder 3 C-Atomen bedeutet. Der Anteil dieser Verbindungen in den Flüssigkristallmischungen liegt vorzugsweise bei 2 bis 30 %, insbesondere bei 3 bis 20 %,

- eine oder mehrere, insbesondere zwei bis fünf Verbindungen der Formel IIIb, IIIc und/oder IIIh,

- wenigstens zwei Verbindungen der Formel IIIc, und gegebenenfalls zusätzlich wenigstens eine Verbindung der Formel IIIb, worin $L^1$ und/oder $L^2$ F bedeuten. Der Anteil dieser Verbindungen in den Flüssigkristallmischungen liegt vorzugsweise bei 7 bis 50 %, insbesondere bei 10 bis 40 %,

- eine oder mehrere Verbindungen der Formel IIIb-1

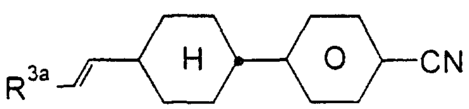

IIIb-1

worin $R^{3a}$ H, $CH_3$, $C_2H_5$ oder n-$C_3H_7$, insbesondere H oder $CH_3$, besonders bevorzugt $CH_3$ bedeutet. Der Anteil dieser Verbindungen in den Flüssigkristallmischungen liegt vorzugsweise bei 2 bis 20 %, insbesondere bei 3 bis 8 %,

- eine oder mehrere, besonders bevorzugt eine, zwei oder drei Tolan-Verbindungen der Formel Ta oder Tb,

- eine oder mehrere, besonders bevorzugt eine, zwei oder drei Tolan-Verbindungen der Formel Th,

- eine oder mehrere Verbindungen der Formel IV25 und/oder IV27, wobei L in Formel IV 25 H oder F, besonders bevorzugt F bedeutet. Der Anteil dieser Verbindungen in den Flüssigkristallmischungen liegt vorzugsweise bei 10 bis 45 %, insbesondere bei 15 bis 40 %,

- mehr als 20 % an Verbindungen mit positiver dielektrischer Anisotropie, insbesondere mit $\Delta\varepsilon \geq +12$,

Die erfindungsgemäßen Mischungen zeichnen sich insbesondere beim Einsatz in TN- und STN-Anzeigen mit hohen Schichtdicken durch sehr niedrige Summenschaltzeiten aus ($t_{ges} = t_{on} + t_{off}$).

Die in den erfindungsgemäßen TN- und STN-Zellen verwendeten Flüssigkristallmischungen sind dielektrisch positiv mit $\Delta\varepsilon \geq 1$. Besonders bevorzugt sind Flüssigkristallmischungen mit $\Delta\varepsilon \geq 3$, insbesondere mit $\Delta\varepsilon \geq 5$.

Die erfindungsgemäßen Flüssigkristallmischungen weisen günstige Werte für die Schwellenspannung $V_{10/0/20}$ und für die Rotationsviskosität $\gamma_1$ auf. Ist der Wert für den optischen Wegunterschied $d \cdot \Delta n$ vorgegeben, wird der Wert für die Schichtdicke d durch die optische Anisotropie $\Delta n$ bestimmt. Insbesondere bei relativ hohen Werten

für d · Δn ist i.a. die Verwendung erfindungsgemäßer Flüssigkristallmischungen mit einem relativ hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für Δn enthalten, sind durch vorteilhafte Werte für die Schaltzeiten gekennzeichnet.

Die erfindungsgemäßen Flüssigkristallmischungen sind weiter durch vorteilhafte Werte für die Steilheit der elektrooptischen Kennlinie gekennzeichnet, und können insbesondere bei Temperaturen über 20 °C mit hohen Multiplexraten betrieben werden. Darüber hinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, daß die Vorzugsorientierung (Direktor) der jeweils daran angrenzenden Flüssigkristall-Moleküle von der einen zur anderen Elektrode gewöhnlich um betragsmäßig 160° bis 720° gegeneinander verdreht ist, entspricht der für derartige Anzeigeelemente üblichen Bauweise. Dabei ist der Begriff der üblichen Bauweise hier weit gefaßt und umfaßt auch alle Abwandlungen und Modifikationen der TN- und STN-Zelle, insbesondere auch Matrix-Anzeigeelemente sowie die zusätzliche Magnete enthaltenden Anzeigeelemente.

Der Oberflächentiltwinkel an den beiden Trägerplatten kann gleich oder verschieden sein. Gleiche Tiltwinkel sind bevorzugt. Bevorzugte TN-Anzeigen weisen Anstellwinkel zwischen der Längsachse der Moleküle an der Oberfläche der Trägerplatten und den Trägerplatten von 0° bis 7°, vorzugsweise 0,01° bis 5°, insbesondere 0,1 bis 2° auf. In den STN-Anzeigen ist der Anstellwinkel bei 1° bis 30°, vorzugsweise bei 1° bis 12° und insbesondere bei 3° bis 10°.

Der Verdrillungswinkel der TN-Mischung in der Zelle liegt dem Betrag nach zwischen 22,5° und 170°, vorzugsweise zwischen 45° und 130° und insbesondere zwischen 80° und 115°. Der Verdrillungswinkel der STN-Mischung in der Zelle von Orientierungsschicht zu Orientierungschicht liegt dem Betrag nach zwischen 100° und 600°, vorzugsweise zwischen 170° und 300° und insbesondere zwischen 180° und 270°.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

In der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen. Die Alkenylreste weisen die trans-Konfiguration auf. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich der in der untenstehenden Tabelle angegebene Code für die Substituenten $R^1$, $R^2$, $L^1$, $L^2$ und $L^3$.

| Code für $R^1$, $R^2$, $L^1$, $L^2$, $L^3$ | $R^1$ | $R^2$ | $L^1$ | $L^2$ | $L^3$ |
|---|---|---|---|---|---|
| nm | $C_nH_{2n+1}$ | $C_mH_{2m+1}$ | H | H | H |
| nOm | $OC_nH_{2n+1}$ | $C_mH_{2m+1}$ | H | H | H |
| nO.m | $C_nH_{2n+1}$ | $OC_mH_{2m+1}$ | H | H | H |
| n | $C_nH_{2n+1}$ | CN | H | H | H |
| nN.F | $C_nH_{2n+1}$ | CN | H | H | F |
| nN.F.F | $C_nH_{2n+1}$ | CN | H | F | F |
| nF | $C_nH_{2n+1}$ | F | H | H | H |
| nOF | $OC_nH_{2n+1}$ | F | H | H | H |
| nF.F | $C_nH_{2n+1}$ | F | H | H | F |
| nmF | $C_nH_{2n+1}$ | $C_mH_{2m+1}$ | F | H | H |
| $nOCF_3$ | $C_nH_{2n+1}$ | $OCF_3$ | H | H | H |
| n-Vm | $C_nH_{2n+1}$ | $-CH=CH-C_mH_{2m+1}$ | H | H | H |
| nV-Vm | $C_nH_{2n+1}-CH=CH-$ | $-CH=CH-C_mH_{2m+1}$ | H | H | H |

Die TN- und STN-Displays enthalten vorzugsweise flüssigkristalline Mischungen, die sich aus ein oder mehreren Verbindungen aus den Tabellen A und B zusammensetzen.

**Tabelle A:** ($L^1$, $L^2$, $L^3$ = H oder F)

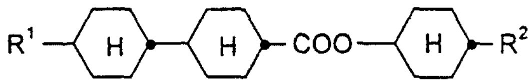

CH

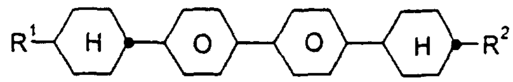

CBC

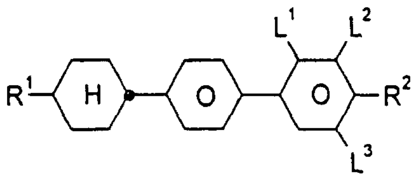

BCH

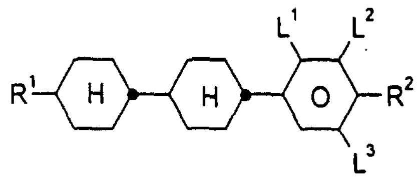

CCP

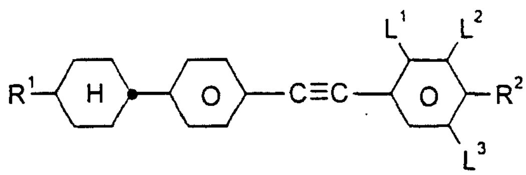

CPTP

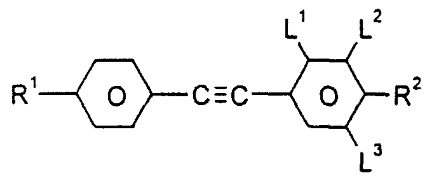

PTP

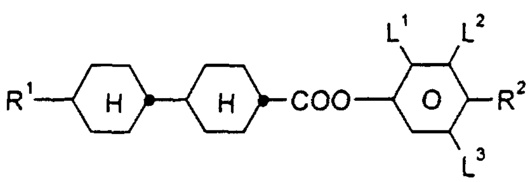

CP

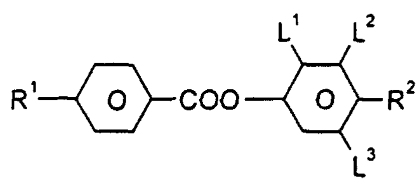

ME

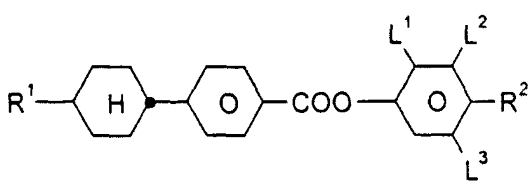

HP

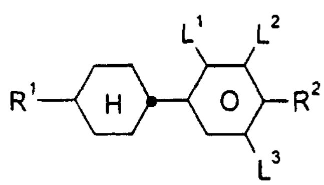

PCH

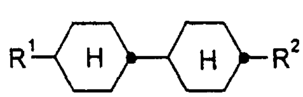

CCH

## Tabelle B:

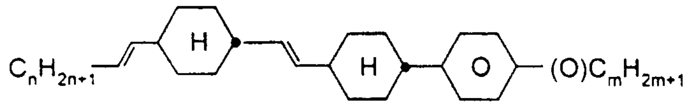

**CVCP-nV-(O)m**

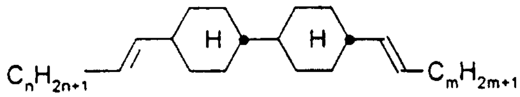

**CC-nV-Vm**

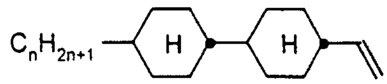

**CC-n-V**

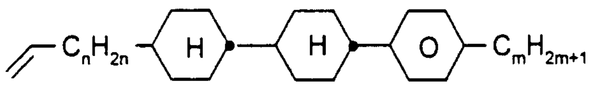

**CCP-Vn-m**

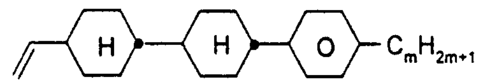

**CCP-V-m**

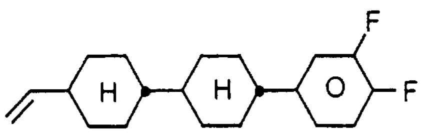

**CCG-V-F**

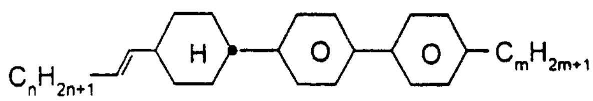

**CPP-nV-m**

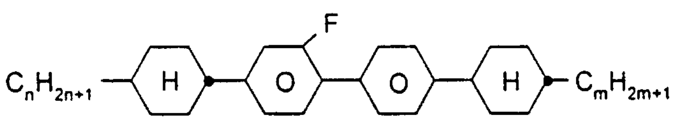

**CBC-nmF**

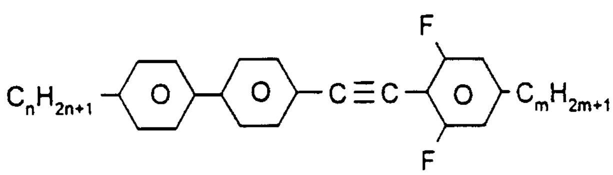

**PPTUI-nm**

Die folgenden Beispiele sollen die Erfindung erläutern, ohne sie zu begrenzen. Es bedeutet

Klp. Klärpunkt (Phasenübergangs-Temperatur nematisch-isotrop),
S-N Phasenübergangs-Temperatur smektisch-nematisch,
Visk. Fließviskosität (soweit nicht anders angegeben bei 20 °C),
$\Delta n$ optische Anisotropie (589 nm, 20 °C)
$n_o$ ordentlicher Brechungsindex (589 nm, 20 °C)
$\Delta\varepsilon$ dielektrische Anisotropie (1 kHz, 20 °C)
$\varepsilon_\perp$ Dielektrizitätskonstante senkrecht zur Moleküllängsachse (1 kHz, 20 °C)
$\gamma 1$ Rotationsviskosität
S Kennliniensteilheit = $V_{90}/V_{10}$
$V_{10}$ Schwellenspannung = charakteristische Spannung bei einem relativen Kontrast von 10 %,

$V_{90}$ charakteristische Spannung bei einem relativen Kontrast von 90 %,
$t_{ave}$ $\frac{t_{on} + t_{off}}{2}$ (mittlere Schaltzeit)
$t_{on}$ Zeit vom Einschalten bis zur Erreichung von 90 % des maximalen Kontrastes,
$t_{off}$ Zeit vom Ausschalten bis zur Erreichung von 10 % des maximalen Kontrastes,
Mux Multiplexrate
$t_{store}$ Tieftemperatur-Lagerstabilität in Stunden (- 20 °C, - 30 °C, - 40 °C)

Vor- und nachstehend sind alle Temperaturen in °C angegeben. Die Prozentzahlen sind Gewichtsprozente. Alle Werte beziehen sich auf 20 °C, soweit nicht anders angegeben. Die Ansteuerung der Anzeigen erfolgt, soweit nicht anders angegeben, bei einer Multiplexrate von 1/64 und einem Bias von 1/9. Die Verdrillung (twist) beträgt 240 °, soweit nicht anders angegeben.

Vergleichsbeispiel 1

| Eine TN- und STN-Mischung bestehend aus | | | |
|---|---|---|---|
| CP-1V-N | 13.00 % | Klp. | 92,0 °C |
| PCH-3N.F.F | 18.00 % | $\Delta n$ | 0,1371 |
| ME2N.F | 2.50 % | $n_o$ | 1,5021 |
| ME3N.F | 3.50 % | $V_{10}$ | 1,42V |
| ME4N.F | 9.00 % | S | 1,044 |
| CCP-V-1 | 13.50 % | $t_{ave}$ | 270 ms |
| BCH-32 | 8.00 % | | |
| BCH2F.F | 9.00 % | | |
| CVCP-V-1 | 5.00 % | | |
| CVCP-V-O1 | 5.00 % | | |
| CVCP-1V-O1 | 5.00 % | | |
| CBC-33 | 3.00 % | | |
| CBC-33F | 5.50 % | | |

Beispiel 1

| Eine TN- und STN-Mischung bestehend aus | | | |
|---|---|---|---|
| CP-1V-N | 6.00 % | Klp. | 91,0°C |
| PCH-3N.F.F | 25.00 % | $\Delta n$ | 0,1382 |
| ME2N.F | 2.50 % | $n_o$ | 1,5028 |
| ME3N.F | 3.50 % | $V_{10}$ | 1,39V |
| ME4N.F | 9.00 % | S | 1,046 |
| CCP-V-1 | 13.50 % | $t_{ave}$ | 240 ms |
| BCH-32 | 8.00 % | | |
| CPP-1V-2 | 12.00 % | | |
| CVCP-V-1 | 5.00 % | | |
| CVCP-V-O1 | 5.00 % | | |
| CVCP-1V-O1 | 5.00 % | | |
| CBC-33F | 5.50 % | | |

weist gegenüber Vergleichsbeispiel 1 ein kürzere Schaltzeit und niedrigere Schwellenspannung auf.

Vergleichsbeispiel 2

| Eine TN- und STN-Mischung bestehend aus | | | |
|---|---|---|---|
| PCH-3N.F.F | 10.00 % | Klp. | 102,5 °C |
| ME2N.F | 2.00 % | $\Delta n$ | 0,1634 |
| ME3N.F | 3.00 % | $n_o$ | 1,5034 |
| ME4N.F | 6.50 % | $V_{10}$ | 1,75 V |
| CC-5-V | 4.00 % | S | 1,074 |
| CCG-V-F | 21.00 % | $t_{ave}$ | 120 ms |
| CCP-V-1 | 13.00 % | $t_{ave}$ (- 20 °C) | 1750 ms |
| CCP-V2-1 | 9.00 % | | |
| CVCP-V-1 | 5.00 % | | |
| PTP-102 | 3.00 % | | |
| PTP-201 | 3.00 % | | |
| PTP-301 | 3.00 % | | |
| PPTUI-3-2 | 15.00 % | | |
| CCPC-33 | 2.50 % | | |

Beispiel 2

| Eine TN- und STN-Mischung bestehend aus | | | |
|---|---|---|---|
| PCH-3N.F.F | 10.00 % | Klp. | 101,0 °C |
| ME2N.F | 2.00 % | $\Delta n$ | 0,1633 |
| ME3N.F | 2.00 % | $n_o$ | 1,5038 |
| ME4N.F | 6.00 % | $V_{10}$ | 1,84 V |
| CC-5-V | 9.00 % | S | 1,081 |
| CCG-V-F | 18.00 % | $t_{ave}$ | 102 ms |
| CCP-V-1 | 12.00 % | $t_{ave}$ (- 20 °C) | 1300 ms |
| CCP-V2-1 | 5.00 % | | |
| CVCP-V-1 | 5.00 % | | |
| PTP-102 | 3.00 % | | |
| PTP-201 | 3.00 % | | |
| PPTUI-3-2 | 15.00 % | | |
| CPP-1V-2 | 10.00 % | | |

weist gegenüber Vergleichsbeispiel 2 eine kürzere Schaltzeit auf.

**Patentansprüche**

**1.** TN- oder STN-Flüssigkristallanzeige mit

- zwei Trägerplatten, die mit einer Umrandung eine Zelle bilden,
- einer in der Zelle befindlichen nematischen Flüssigkristallmischung mit positiver dielektrischer Anisotropie,
- Elektrodenschichten mit Orientierungsschichten auf den Innenseiten der Trägerplatten,
- einem Anstellwinkel zwischen der Längsachse der Moleküle an der Oberfläche der Trägerplatten und den Trägerplatten von 0 Grad bis 30 Grad, und

- einem Verdrillungswinkel der Flüssigkristallmischung in der Zelle von Orientierungsschicht zu Orientierungsschicht dem Betrag nach zwischen 22,5° und 600°,

- einer nematischen Flüssigkristallmischung bestehend aus

  a) 15 - 80 Gew.% einer flüssigkristallinen Komponente A, bestehend aus einer oder mehreren Verbindungen mit einer dielektrischen Anisotropie von über +1,5;

  b) 20 - 85 Gew.% einer flüssigkristallinen Komponente B, bestehend aus einer oder mehreren Verbindungen mit einer dielektrischen Anisotropie zwischen -1,5 und +1,5;

  c) 0 - 20 Gew.% einer flüssigkristallinen Komponente D, bestehend aus einer oder mehreren Verbindungen mit einer dielektrischen Anisotropie von unter -1,5 und

  d) gegebenenfalls einer optisch aktiven Komponente C in einer Menge, daß das Verhältnis zwischen Schichtdicke (Abstand der Trägerplatten) und natürlicher Ganghöhe der chiralen nematischen Flüssigkristallmischung etwa 0,2 bis 1,3 beträgt,

**dadurch gekennzeichnet, daß** die Flüssigkristallmischung mindestens eine Verbindung der Formel I enthält

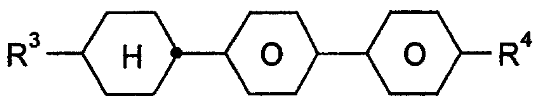

I

worin

$R^3$ eine Alkenylgruppe mit 2 bis 7 C-Atomen, und
$R^4$ eine Alkyl-, Alkoxy- oder Alkenylgruppe mit 1 bis 12 C- Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind,

bedeuten,
und mindestens eine Verbindung der Formel IV9 und/oder IV24 enthält

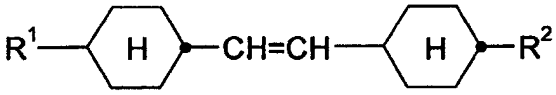

IV9

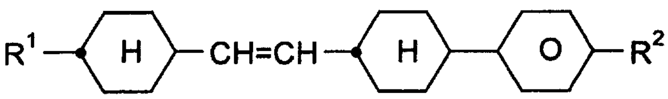

IV24

worin $R^1$ Alkenyl mit 2 bis 7 C-Atomen und $R^2$ Alkyl oder Alkoxy mit 1 bis 6 C-Atomen bedeutet.

**2.** Flüssigkristallanzeige nach Anspruch 1, **dadurch gekennzeichnet, daß** sie mindestens eine Verbindung der Formel II und/oder II* enthält

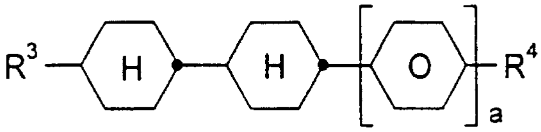

II

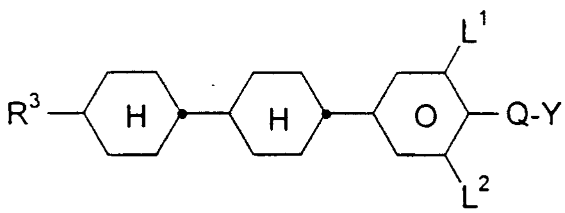

II*

worin $R^3$ und $R^4$ die in Formel I angegebene Bedeutung besitzen,

| | |
|---|---|
| a | 0 oder 1, |
| $L^1$ und $L^2$ | jeweils unabhängig voneinander H oder F, |
| Q | $CF_2$, $OCF_2$, CFH, OCFH oder eine Einfachbindung, und |
| Y | F oder Cl |

bedeuten.

3. Flüssigkristallanzeige nach einem der Ansprüche 1 und 2, **dadurch gekennzeichnet, daß** Komponente A eine oder mehrere Verbindungen der folgenden Formeln enthält

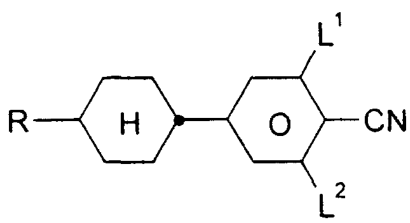

IIIb

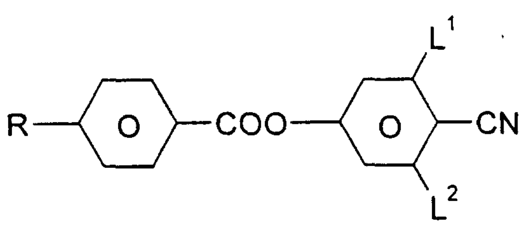

IIIc

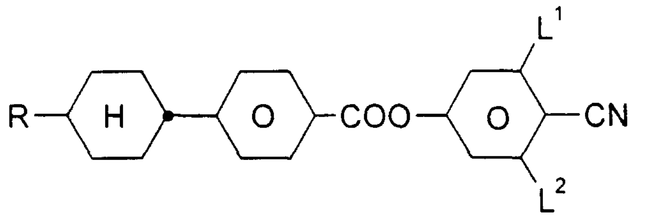

IIIf

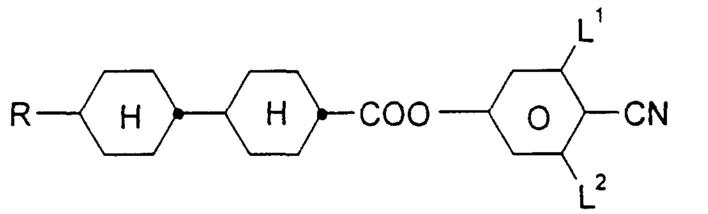

IIIh

worin

R eine Alkyl-, Alkoxy- oder Alkenylgruppe mit 1 bis 12 C- Atomen, wobei auch ein oder zwei nicht benachbarte $CH_2$- Gruppen durch -O-, -CH=CH-, -CO-, -OCO- oder -COO- so ersetzt sein können, daß O-Atome nicht direkt miteinander verknüpft sind, und

$L^1$ und $L^2$ jeweils unabhängig voneinander H oder F

bedeuten.

4. Flüssigkristallanzeige nach einem der Ansprüche 1 bis 3, **dadurch gekennzeichnet, daß** sie eine oder mehrere Verbindungen der folgenden Formeln enthält

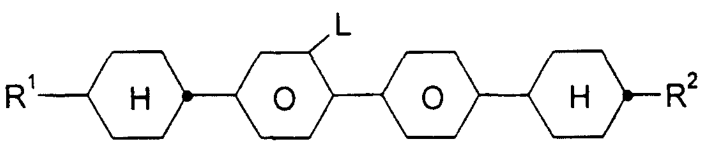

IV25

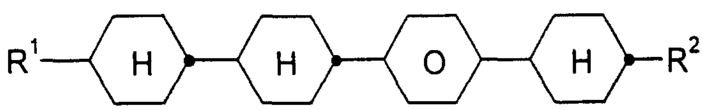

IV27

worin

$R^1$ und $R^2$ jeweils unabhängig voneinander eine Alkyl-, Alkoxy- oder Alkenylgruppe mit 1 bis 12 C-Atomen, wobei auch ein oder zwei nicht benachbarte $CH_2$-Gruppen durch -O-, -CH=CH-, -CO-, -OCO- oder -COO- so ersetzt sein können, daß O- Atome nicht direkt miteinander verknüpft sind, und

L H oder F

bedeuten.

5. Flüssigkristallanzeige nach einem der Ansprüche 1 bis 4, **dadurch gekennzeichnet, daß** sie eine oder mehrere Tolan-Verbindungen ausgewählt aus den folgenden Formeln enthält.

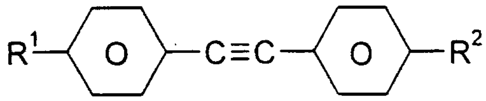

Ta

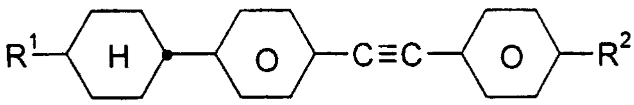

Tb

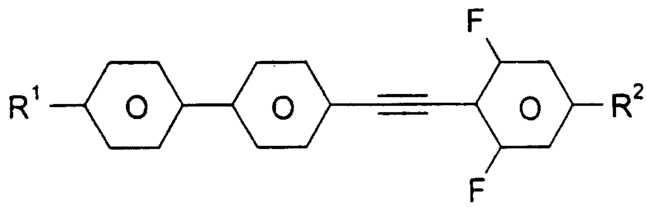

Th

worin $R^1$ und $R^2$ die in Anspruch 5 angegebene Bedeutung besitzen.

**6.** Flüssigkristallanzeige nach einem der Ansprüche 1 bis 5, **dadurch gekennzeichnet, daß** sie 3 bis 40 % einer oder mehrerer Verbindungen der Formel I enthält.

**7.** Flüssigkristallmischung der in einem der Ansprüche 1 bis 6 definierten Zusammensetzung.

## Claims

**1.** TN or STN liquid-crystal display having

- two outer plates, which, with a frame, form a cell,
- a nematic liquid-crystal mixture of positive dielectric anisotropy located in the cell,
- electrode layers with alignment layers on the insides of the outer plates,
- a tilt angle between the longitudinal axis of the molecules at the surface of the outer plates and the outer plates of from 0 degree to 30 degrees, and
- a twist angle of the liquid-crystal mixture in the cell from alignment layer to alignment layer with a value of between 22.5° and 600°,
- a nematic liquid-crystal mixture consisting of

  a) 15 - 80% by weight of a liquid-crystalline component A consisting of one or more compounds having a dielectric anisotropy of greater than +1.5;

  b) 20 - 85% by weight of a liquid-crystalline component B consisting of one or more compounds having a dielectric anisotropy of between -1.5 and +1.5;

  c) 0 - 20% by weight of a liquid-crystalline component D consisting of one or more compounds having a dielectric anisotropy of below -1.5, and

d) if desired, an optically active component C in such an amount that the ratio between the layer thickness (separation of the outer plates) and the natural pitch of the chiral nematic liquid-crystal mixture is about 0.2 to 1.3,

**characterised in that** the liquid-crystal mixture comprises at least one compound of the formula I

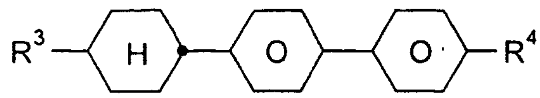

I

in which

$R^3$ denotes an alkenyl group having 2 to 7 C atoms, and

$R^4$ denotes an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another,

and at least one compound of the formula IV9 and/or IV24

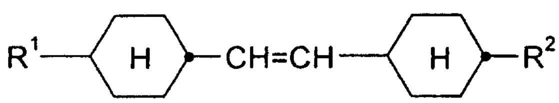

IV9

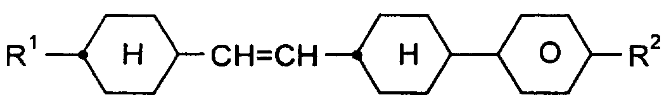

IV24

in which $R^1$ denotes alkenyl having 2 to 7 C atoms and $R^2$ denotes alkyl or alkoxy having 1 to 6 C atoms.

**2.** Liquid-crystal display according to Claim 1, **characterised in that** it comprises at least one compound of the formula II and/or II*

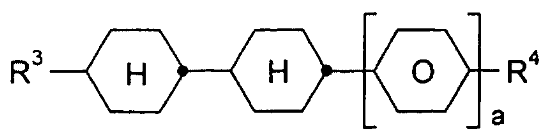

II

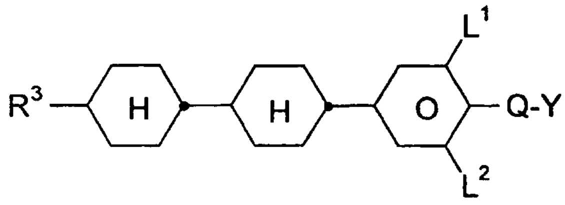

II*

in which $R^3$ and $R^4$ have the meaning indicated in formula I,

a denotes 0 or 1,

$L^1$ and $L^2$ each, independently of one another, denote H or F,

Q denotes $CF_2$, $OCF_2$, CFH, OCFH or a single bond, and

Y denotes F or Cl.

**3.** Liquid-crystal display according to one of Claims 1 and 2, **characterised in that** component A comprises one or more compounds of the following formulae

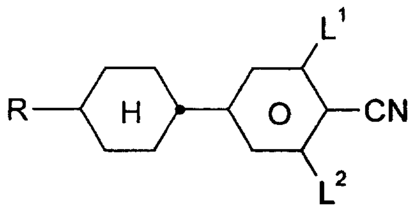

IIIb

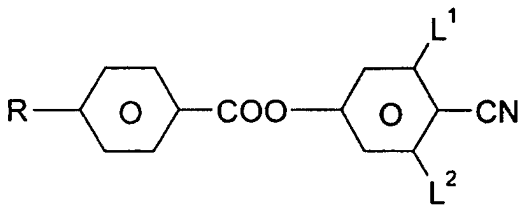

IIIc

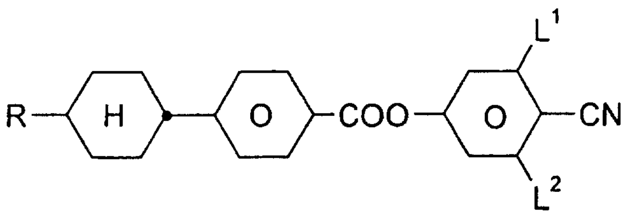

IIIf

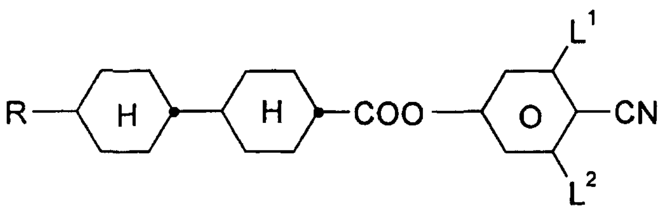

IIIh

in which

R denotes an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, and

$L^1$ and $L^2$ each, independently of one another, denote H or F.

**4.** Liquid-crystal display according to one of Claims 1 to 3, **characterised in that** it comprises one or more compounds

of the following formulae

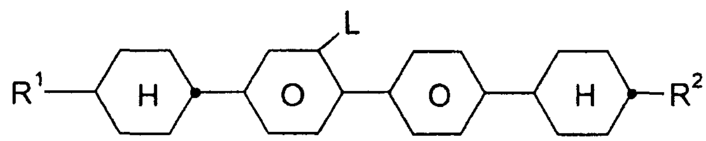

IV25

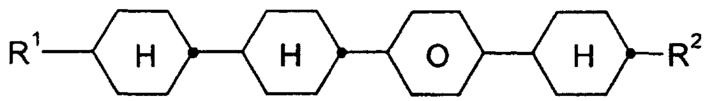

IV27

in which

$R^1$ and $R^2$ each, independently of one another, denote an alkyl, alkoxy or alkenyl group having 1 to 12 C atoms, in which, in addition, one or two non-adjacent $CH_2$ groups may be replaced by -O-, -CH=CH-, -CO-, -OCO- or -COO- in such a way that O atoms are not linked directly to one another, and

L denotes H or F.

**5.** Liquid-crystal display according to one of Claims 1 to 4, **characterised in that** it comprises one or more tolan compounds selected from the following formulae

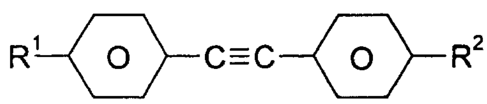

Ta

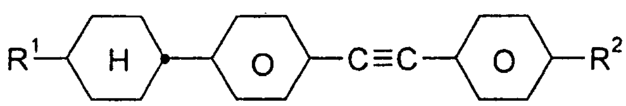

Tb

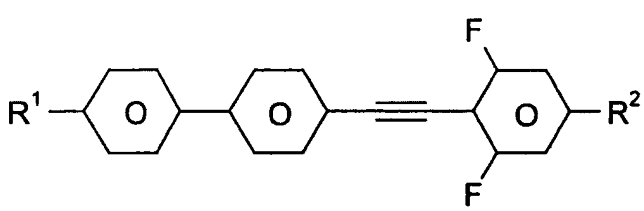

Th

in which $R^1$ and $R^2$ have the meaning indicated in Claim 4.

**6.** Liquid-crystal display according to one of Claims 1 to 5, **characterised in that** it comprises 3 to 40% of one or more compounds of the formula 1.

**7.** Liquid-crystal mixture of the composition defined in one of Claims 1 to 6.

## Revendications

**1.** Affichage à cristaux liquides TN ou STN comprenant

- deux plaques externes qui, avec un cadre, forment une cellule,
- un mélange de cristaux liquides nématiques d'anisotropie diélectrique positive, localisé dans la cellule,
- des couches d'électrode avec des couches d'alignement sur les intérieurs des plaques externes,
- un angle d'inclinaison entre l'axe longitudinal des molécules au niveau de la surface des plaques externes et les plaques externes de 0 degré à 30 degrés, et
- un angle de torsion du mélange de cristaux liquides dans la cellule entre une couche d'alignement et une autre couche d'alignement ayant une valeur entre 22,5° et 600°,
- un mélange de cristaux liquides nématiques constitué par

a) 15 - 80% en poids d'un composant A de cristal liquide, constitué par un ou plusieurs composés ayant une anisotropie diélectrique supérieure à +1,5;

b) 20 - 85% en poids d'un composant B de cristal liquide, constitué par un ou plusieurs composés ayant une anisotropie diélectrique comprise entre -1,5 et +1,5;

c) 0 - 20% en poids d'un composant D de cristal liquide, constitué par un ou plusieurs composés ayant une anisotropie diélectrique inférieure à -1,5 et

d) optionnellement un composant C actif optiquement d'une quantité telle que le rapport entre l'épaisseur de couche (séparation des plaques externes) et le pas naturel du mélange de cristaux liquides nématiques chiraux est d'environ 0,2 à 1,3,

**caractérisé en ce que** le mélange de cristaux liquides comprend au moins un composé de la formule I

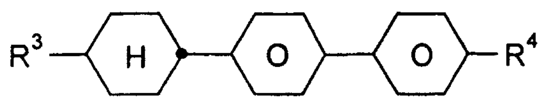

I

dans laquelle

$R^3$ représente un groupe alkényle ayant 2 à 7 atomes C, et
$R^4$ représente un groupe alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres,

et au moins un composé de la formule IV9 et/ou IV24

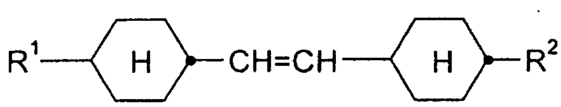

IV9

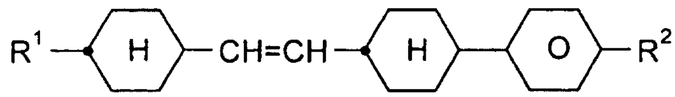

IV24

dans lesquelles $R^1$ représente alkényle ayant 2 à 7 atomes C et $R^2$ représente alkyle ou alkoxy ayant 1 à 6 atomes C.

**2.** Affichage à cristaux liquides selon la revendication 1, **caractérisé en ce qu'**il comprend au moins un composé de la formule II et/ou II*

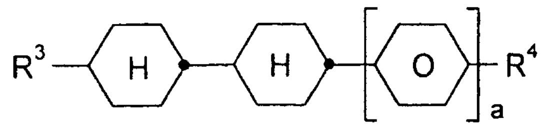

II

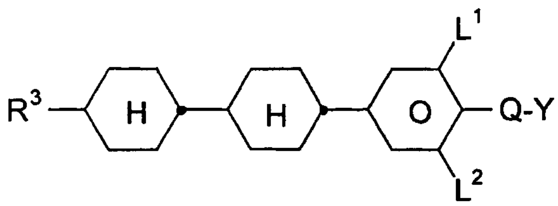

II*

dans lesquelles

$R^3$ et $R^4$ présentent la signification indiquée dans la formule I,

a représente 0 ou 1,

$L^1$ et $L^2$ chacun, indépendamment l'un de l'autre, représentent H ou F,

Q représente $CF_2$, $OCF_2$, CFH, OCFH ou une liaison simple, et

Y représente F ou Cl.

**3.** Affichage à cristaux liquides selon l'une des revendications 1 et 2, **caractérisé en ce que** le composant A comprend un ou plusieurs composés des formules qui suivent

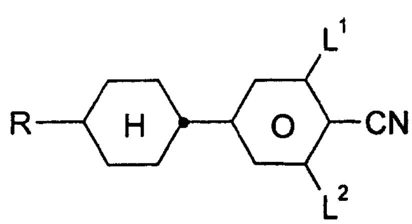

IIIb

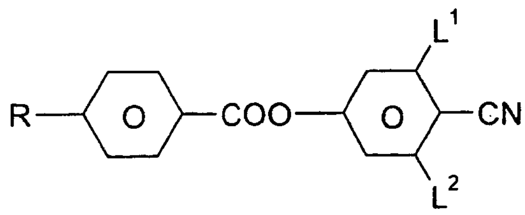

IIIc

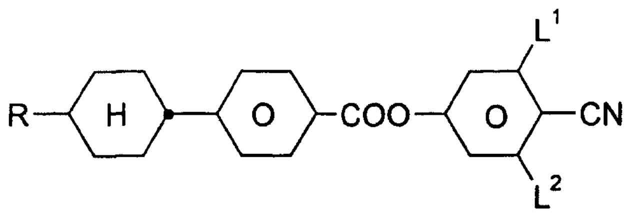

IIIf

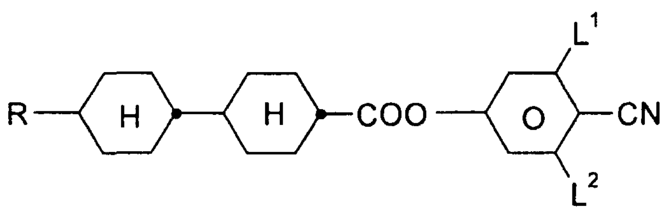

IIIh

dans lesquelles

R représente un groupe alkyle, alkoxy ou alkényle ayant 1 à 12 atomes C, dans lequel, en outre, un ou deux groupes $CH_2$ non adjacents peuvent être remplacés par -O-, -CH=CH-, -CO-, -OCO- ou -COO- de telle sorte que des atomes O ne soient pas liés directement les uns aux autres, et

$L^1$ et $L^2$ chacun, indépendamment l'un de l'autre, représentent H ou F.

**4.** Affichage à cristaux liquides selon l'une des revendications 1 à 3,
**caractérisé en ce qu'**il comprend un ou plusieurs composés des formules qui suivent

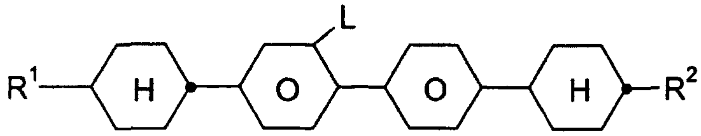

IV25

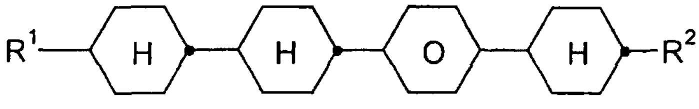

IV27

dans lesquelles

$R^1$ et $R^2$ chacun, indépendamment l'un de l'autre, représentent un groupe alkyle, alkoxy ou alkényle ayant 1 à 12 atomes C, dans lequel, en outre, un ou deux groupes $CH_2$ non adjacents peuvent être remplacés

par -O-, -CH=CH-, -CO-, -OCO- ou -COO- de telle sorte que des atomes O ne soient pas liés directement les uns aux autres, et

L représente H ou F.

5. Affichage à cristaux liquides selon l'une des revendications 1 à 4, **caractérisé en ce qu'**il comprend un ou plusieurs composés tolan choisis parmi les formules qui suivent

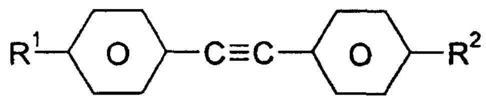

Ta

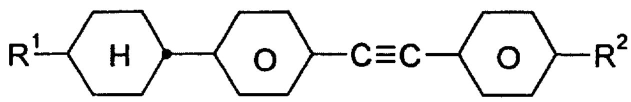

Tb

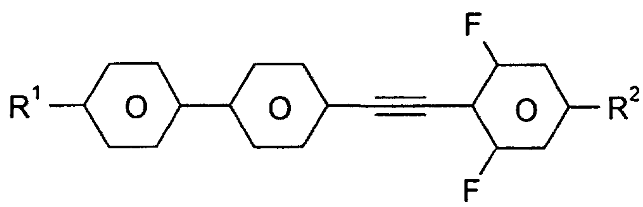

Th

dans lesquelles $R^1$ et $R^2$ présentent la signification indiquée dans la revendication 4.

6. Affichage à cristaux liquides selon l'une des revendications 1 à 5, **caractérisé en ce qu'**il comprend 3 à 40% d'un ou de plusieurs composés de la formule I.

7. Mélange de cristaux liquides de la composition définie dans l'une des revendications 1 à 6.